# EUROPEAN PATENT SPECIFICATION

(11) **EP 1 301 739 B1**
(45) Date of publication and mention of the grant of the patent: **31.08.2005**
(21) Application number: 01954323.0
(22) Date of filing: 09.07.2001
(51) Int. Cl.: F16L 41/14

(54) **DEFORMABLE GASKET AND A WALL-TRAVERSING FLUID CONNECTOR**
VERFORMBARE DICHTUNG UND EINE DURCH EINE WAND DURCHGEFÜHRTE FLUID-ANSCHLUSSEINRICHTUNG
JOINT DEFORMABLE ET RACCORD DE FLUIDE TRANS-PAROI

(30) Priority: 17.07.2000 IT RM000394
(43) Date of publication of application: 16.04.2003
(73) Proprietor: Trombatore, Giuseppe, 96019 Rosolini (IT)
(72) Inventor: Trombatore, Giuseppe, 96019 Rosolini (IT)
(74) Representative: Leone, Mario
(86) International application number: PCT/IT2001/000359
(87) International publication number: WO 2002/006719

(56) References cited:
- FR-A- 2 264 238
- FR-A- 2 269 673
- GB-A- 2 223 550
- US-A- 3 879 065
- US-A- 3 973 789
- US-A- 5 692 249

## Description

The present invention relates to a gasket, a connector set and method thereof to allow the seal flow of a fluid through a wall.

In the hydraulic field, there is often a need for connecting two wall-partitioned rooms, so as to allow the seal flow of a fluid therethrough. This occurs, e.g., when it be desirable to connect the inside room of a tank to an outside duct.

Said connection is carried out by obtaining a suitable seat into the wall and installing a connector set thereat.

Currently employed connector sets comprise a tubular connector member, commonly called 'caisson connector', having one or more externally threaded portions. Said sets further comprise two ring nuts, to lock the caisson connector at opposite sides of the wall. This locking provides the interposition of an annular gasket between each ring nut and the wall.

In order to install such a connector set, first of all the caisson connector should be inserted through the connector seat. Therefor, the seat will have a flow port of transversal dimensions equal to or slightly greater than those of the connector, yet smaller than the transversal dimensions of the two ring nuts. Then, each ring nut is screwed onto the caisson connector, until tightening the related gasket against the respective wall face.

The connector sets of the known art described above entail several relevant drawbacks.

The main drawback lies in that the set installing step requires that the two ring nuts and the gaskets thereof be inserted onto the caisson connector from opposite sides of the wall. Therefore, this fitting generally requires the employ of two workers, each one handling one ring nut.

Moreover, in case of a fitting of the set on a tank, said technique requires that a worker insert an arm inside the tank itself to install the inside ring nut. However, this often proves highly difficult, as tanks frequently have an inlet mouth of reduced dimensions and a remarkable height.

FR-A-2 269 673 discloses a gasket having a convex shape, which gasket allows installing a connector set from one side only of a partitioning wall.

US-A-3,879,065 discloses a gasket with a flexible cylindrical body which is installed in a body wall of a urinary closet.

US-A-5 692 249 discloses a top mounted flush valve having a seal body of a substantially cylindrical shape apt to deform to provide a seal at a partition wall of a toilet flush tank.

The technical problem underlying the present invention is that of providing a gasket, a connector set and a connection method thereof allowing to overcome the drawbacks hereto mentioned with reference to the known art.
This problem is solved by a gasket to be used with a connector set apt to allow the seal flow of a fluid through a wall according to claim 1.

According to the same inventive concept, the present invention also relates to a connector set according to claim 11.

The present invention also relates to a method to implement a connector apt to allow the seal flow of a fluid through a wall according to claim 31.

The present invention provides several relevant advantages.

The main advantage lies in that said gasket and the associated connector set can be installed operating merely from one side of the wall, with no need to get inside of a tank. Hence, the connector set can quickly and effectively be fitted by a single worker, with remarkable saving in time and costs.

Other advantages, features, and the operation modes of the present invention will be made apparent in the following detailed description of some embodiments thereof, given by way of example and not for limitative purposes. Reference will be made to the attached drawings, wherein:
Fig. 1 is an exploded and sectional view of a first embodiment of a connector set according to the present invention;
Fig. 2 is a partially sectional front view of the set of Fig. 1 in an assembled installation configuration;
Figs. 3A and 3B each relate to a step of the installation on a tank of the set of Fig. 1, showing a front view thereof;
Fig. 4 is a partially sectional front view of the set of Fig. 1 in a seal configuration;
Fig. 5 is a further sectional view of some components of the set of Fig. 1;
Fig. 6 relates to a second embodiment of a connector set according to the present invention, showing a sectional view thereof;
Fig. 7 relates to a third embodiment of a connector set according to the present invention, showing a sectional view thereof, the gasket disclosed not forming part of the invention;
Figs. 8A, 8B and 8C do not form part of the invention;
Fig. 8D relates to an alternate embodiment of the gasket of the invention, showing a sectional view thereof;
Fig. 9 relates to a fourth embodiment of the set of the invention, showing a sectional view of a component thereof;
Fig. 10 relates to a fifth embodiment of the set of the invention, showing a partially sectional view of some components thereof;
Figs. 11A and 11B relate to a sixth embodiment of the set of the invention, showing a sectional view thereof, the gasket disclosed not forming part of invention;
Fig. 12 relates to a seventh embodiment of the set of the invention, showing a front view of some components thereof; and
Fig. 13 relates to a variant of the embodiment of Fig. 12, showing a partially sectional front view of some components thereof.

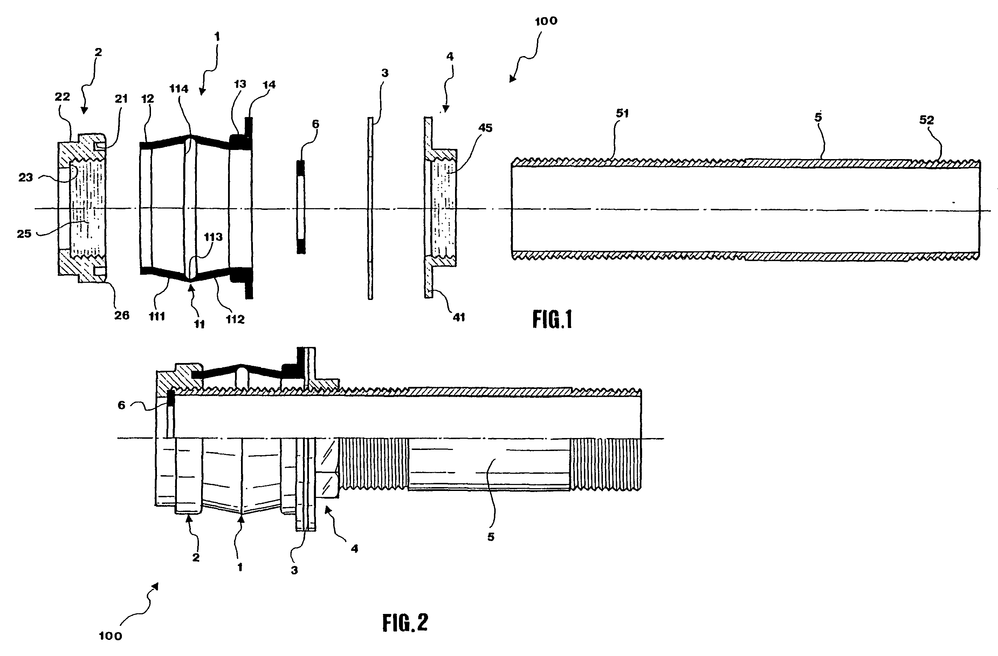

Referring initially to Fig. 1, a connector set apt to allow the seal flow of a fluid through a wall is generally indicated with 100. In particular, in the present embodiment such set 100 is apt to be fitted on a drinking fluid tank, to connect the inner room thereof to the outside.

According to the invention, the connector set 100 comprises a gasket 1 having a deformable region 11 and deforming means of such gasket, apt to be operated to deform the gasket 1, once the latter be inserted within a connector seat obtained into the wall, to bring the latter in a seal configuration.

The set 100 further comprises a tubular connector member 5 of the type commonly referred to as 'barilotto' in Italian.

In the present embodiment, said deforming means comprises an inside locking device, in particular an inside ring nut 2, apt to lock, in co-operation with the gasket 1, the tubular member 5 at the inside of the tank wall. The deforming means further comprises an outside locking device, in particular an outside ring nut 4, apt to lock the tubular member 5 at the outside of the tank wall in order to prevent the sliding thereof toward the inside of the tank itself.

It will be understood that the application of the invention to a tank wall is being disclosed merely by way of example, since the gasket, the set and the method thereof can effectively be applied to walls of any nature whatsoever. Therefor, the terms 'inside' and 'outside' adopted here could also apply to such further applications of the invention, in order to simply and effectively tell apart the two faces of the wall interested by the connection.

The deforming means also provides an intermediate coupling member between the outside locking device, i.e., the ring nut 4, and the gasket 1, which in the present embodiment is a washer 3.

Each of the above-disclosed components will now be detailed with reference to the specific embodiment herein disclosed.

Always with reference to Fig. 1, the gasket 1 has a substantially tubular shape, to be arranged within the aforementioned connector seat, engaging the latter from side to side. This shape thereof further allows the passage of the tubular member 5 therethrough.

The gasket 1 comprises, at one end section thereof, a first annular coupling portion 12, apt to co-operate with a gasket seat 21 of the ring nut 2.

Adjacently to such first coupling portion 12, the gasket 1 has said deformable region 11, which in this first embodiment has a substantially convex shape. In particular, such convex shape is defined by two walls, i.e., a first wall 111 and a second wall 112, both having a substantially frustocone-shaped profile. The walls 111 and 112 are juxtaposed at the greater base of the frustum of cone, defining, at said juxtaposition, a gasket portion of a cross section which is substantially greater with respect to the adjacent gasket portions, indicated with 113 in Fig. 1.

As it will be apparent hereinafter, with reference to the employ modes of the set of the invention, the convex shape of the deformable region 11 implements a deformation raiser for the gasket 1.

In the present embodiment, the deformable region 11 also has a weakening groove 114, in form of an annular groove obtained at said greater section portion 113, the role of which will be disclosed later on, with reference to the employ modes of the gasket 1. Of course, this annular groove could have any cross-sectional profile, e.g., squared, rounded, etc. Moreover, said groove could be obtained externally to the gasket instead of internally thereto, and even concern merely a fraction of the cross section thereof.

The gasket 1 further has a second annular coupling portion, contiguous to the second wall 112 and indicated with 13, apt to co-operate with the inside wall of said connector seat to implement a seal.

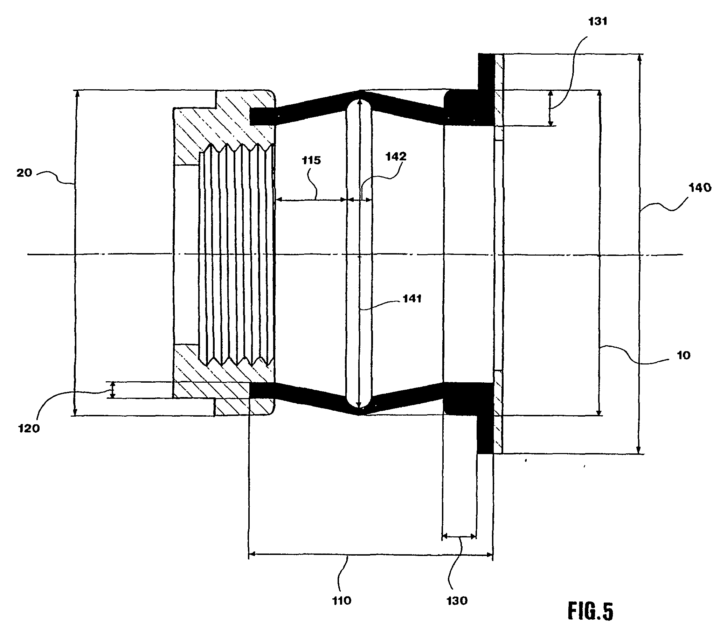

The second coupling portion 13 has a longitudinal extension (indicated by an arrow 130 in Fig. 5) which is substantially lower than the thickness of the tank wall onto which the set 100 is to be installed, due to reasons that will be made apparent later on, with reference to the operation modes thereof. Furthermore, the second coupling portion 13 has a thickness (indicated by an arrow 131) which is substantially greater than that of the first annular coupling portion 12 (the latter being indicated by an arrow 120).

Moreover, the gasket 1 has an end portion 14 shaped as an annular tab, having a diameter (indicated by an arrow 140 in Fig. 5) which is markedly greater than the diameter 20 of the inside ring nut 2.

Preferably, the gasket 1 is made in a non-toxic rubber resistant to traction and cut, according to moulding techniques well-known to those skilled in the art. Variant embodiments provide the use of alternate materials elastically deformable, like, e.g., cork or aluminium.

The tubular member 5 is of traditional type and well-known to those skilled in the art, having two longitudinal portions externally threaded, located at opposite ends thereof. In particular, one of such portions bears a first thread 51, for the connection to the inside ring nut 2 and to the outside ring nut 4, and the other one a second thread 52, for the connection to another tank or with other fluid transfer means, like, e.g., a faucet, a duct or a pump.

In the present embodiment, the threads 51 and 52, as well as the threads of the other components of the set which will hereinafter be disclosed, are cylindrical gas threads. More specifically, in the present embodiment the use of threads of ¾ of an inch Class B, pursuant to the UNI (Italian Standard Institute) ISO 228 norms, is provided. As it will be well-known to those skilled in the art, gas threads are commonly employed in the hydraulic field for non-seal couplings onto the thread. Therefore, in association with the screw connection by means of said gas threads, the use of additional sealing means, like hemp, Teflon or sealants according to seal connection techniques well-known to those skilled in the art is recommendable. In particular, for threads having size not greater than 3 inches, of gas or water seals, etc., the use of sealants, usually anaerobic ones, is recommendable.

Likewise the ring nuts of traditional type, the inside ring nut 2 is shaped substantially as a hollow cylinder and it has, starting from an end cross section thereof, two handling notches 22, longitudinally extending thereon, apt to receive a tool for the mounting of the ring nut 2 onto the tubular member 5.

It will be understood that alternate embodiments could provide handling tool seats shaped differently from said notches 22, e.g., in form of a projecting structure having a hexagon-shaped profile.

Near to the same end cross section, the inside walls of the ring nut 2 implement an annular ledge 23, for the resting in abutment of the tubular member 5. This abutment is implemented by interposition of a plane ring-shaped annular gasket 6, made in a non-toxic material. Also this annular gasket 6 is of traditional type, therefore a further description thereof will be omitted. However, it will be understood that the presence of such annular gasket 6 is totally optional. In particular, between the ring nut 2 and the tubular member 5 a metal-metal seal coupling can be provided, so as to attain a greater bearing strength.

Adjacently to the annular ledge 23, the inside ring nut 2 has an inner nut thread 25, apt to co-operate with the first thread 51 of the tubular member 5 for the assembling of the connector set 100.

Moreover, the inside ring nut 2 has, at an end cross section thereof opposite to that of the handling notches 22, said gasket seat 21, apt to receive the first coupling portion 12 of the gasket 1. In the present embodiment, this gasket seat 21 is in form of an annular groove partially circumscribed to the nut thread 25. In this case as well, it will be understood that the gasket seat 21, as well as the corresponding first coupling portion 12 of the gasket 1 itself, can have different profiles, both squared and rounded ones, in order to meet specific seal demands. In particular, in order to provide a firm holding of the gasket 1, when observed in a cross section the gasket seat 21 and the associated first coupling portion 12 can have an arrow-shaped profile. Moreover, the gasket seat can have a conically profiled mouth implementing a raiser for the insertion of the gasket.

Moreover, at this same end section the inside ring nut 2 has an outside bevel corner 26. Of course, the shape of such bevelling could be any one, e.g., circular, oval, squared, triangular, etc.

Preferably, the dimensions of the cross section of the ring nut 2 are comparable to the maximum transversal dimensions of the greater section portion 113 of the gasket 1, when the latter is in an undeformed configuration. 'Comparable' means that the transversal dimensions of the ring nut 2 are substantially equal, a little greater or smaller, in terms of several millimetres, to the maximum transversal dimensions of the greater section portion 113. Thus, as it will be made apparent in the following, with reference to the operation modes of the set of the invention, the insertion of the gasket 1 through the connector seat is facilitated. In particular, the inside ring nut 2 has a diameter (indicated by an arrow 20 in Fig. 5) substantially comparable to the maximum diameter of the portion 113 (the latter being indicated by an arrow 10). As mentioned above, preferably the difference between said two diameters is in the order of several millimetres.

Moreover, preferably the diameter of the inside ring nut 2 is substantially comparable to that of the second coupling portion 13 of the gasket 1 as well.

The inside ring nut 2 can be implemented by moulding, in plastic material or in brass, in this latter case with a subsequent turning step. Due to said use for drinkable fluids, the material employed will anyhow be non-toxic. Of course, alternate embodiments could provide the employ of different materials, in order to meet specific construction and/or maintenance needs, also related to the specific type of fluid contained in the tank.

The washer 3 is shaped as a plane ring, with an inside port having a diameter apt to allow the passage of the tubular member 5. The washer 3 has, at least onto the face apt to contact the outside ring nut 4, a low friction coefficient. Therefor, the washer 3 can be made in polished metal, e.g., in brass, according to the techniques hereto described with reference to the inside ring nut 2.

The outside ring nut 4 comprises, at the end cross section thereof apt to abut onto the washer 3, an annular abutment tab 41. Adjacently to the latter, the outside ring nut 4 has a body shaped substantially as a hollow cylinder. The latter is internally provided with a nut thread 45, apt to co-operate with the first thread 51 of the tubular member 5 to connect the outside ring nut 4 to the tubular member itself.

Also the abutment tab 41 can be made in a low friction coefficient material, e.g., polished metal, to implement a low friction coefficient coupling to the washer 3.

Since the outside ring nut 4 is of traditional type and already in use in the implementation of tank connectors, a further description thereof will be omitted.

The assembly modes of the connector set 100 will hereinafter be described with reference to Figs. 1 and 2.

First of all, the outside ring nut 4 is mounted onto the tubular member 5, bringing the nut thread 45 of the former in engagement to the first thread 51 of the latter. The outside ring nut 4 is tightened onto the tubular member 5 up to a distance from the mouth of the first thread 51 allowing a sufficient clearance for the mounting of the other components of the set onto the tubular member 5.

Then, the washer 3 is inserted onto the tubular member 5, until it abuts the outside ring nut 4.

Then, the annular gasket 6 is inserted into the inside ring nut 2 until abutting the latter onto the annular ledge 23.

The first annular coupling portion 12 of the gasket 1 is then fixedly inserted within the gasket seat 21 of the inside ring nut 2.

Therefore, the inside ring nut 2 - annular gasket 6 - gasket 1 assembly is inserted onto the tubular member 5, bringing the nut thread 25 of the inside ring nut 2 in engagement onto the first thread 51 of the latter. The inside ring nut 2 is tightened onto the tubular member 5 until the mouth of the latter forces in abutment the annular gasket 6 onto the ledge 23. This step of mounting the ring nut 2 onto the tubular member 5 is carried out with a key tool of traditional type, apt to engage the handling notches 22.

At this point, the function of the annular gasket 6, which ensures a seal between the inside ring nut 2 and the tubular member 5 at the mouth of the latter, preventing a fluid spilling through the related screw-nut thread coupling, will be better understood.

Then, the outside ring nut 4 is rotated, thereby causing a translation thereof along the tubular member 5 towards the other components of the set. In this translation, the outside ring nut 4 pushes the washer 3 until the latter abut onto the tab portion 14 of the gasket 1.

The assembled installation configuration thus obtained is shown in Fig. 2. It will be understood that in this installation configuration the gasket 1 is substantially undeformed.

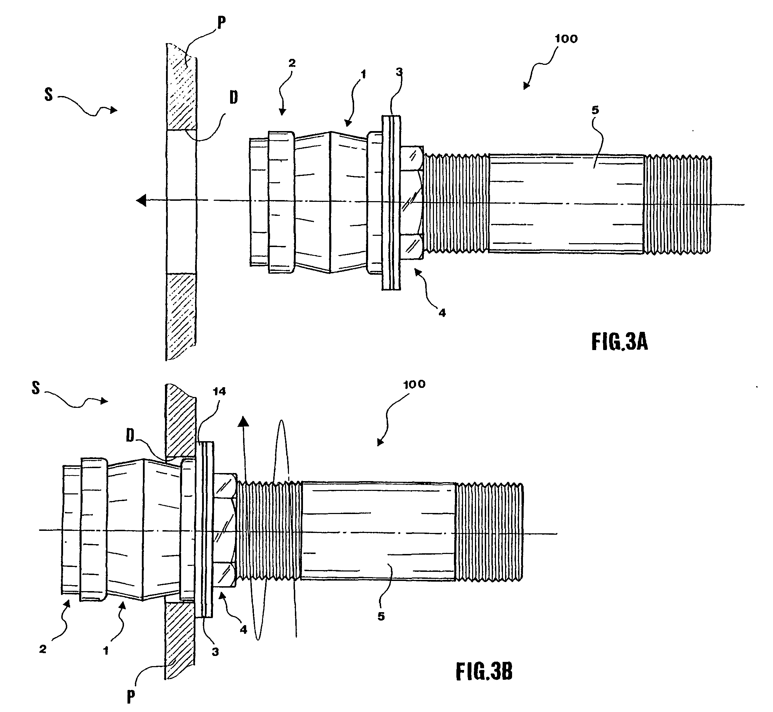

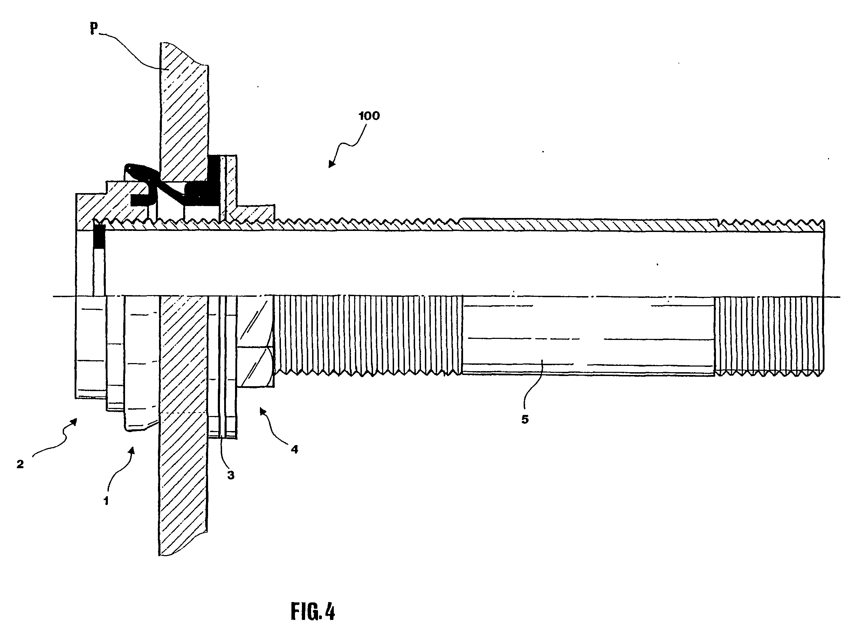

The installation modes of the connector set 100 so assembled onto a tank will hereinafter be described with reference to Figs. 3A, 3B and 4.

With initial reference to Fig. 3A, first of all the aforementioned connector seat, indicated with D, for the set 100 into the wall P of the tank S, is to be obtained. The latter can be, e.g., a tank outletting drinkable water destined to water piping.

This connector seat D, in form of a through hole having a substantially circular section, can be obtained with a crown saw of traditional type. The seat D should have a diameter substantially comparable, i.e., substantially equal, a little greater or smaller, in terms of several millimetres at most, to the diameter 20 of the inside ring nut 2, so as to allow the passage of the latter therethrough. For a diameter of the seat D lower than that of the inside ring nut 2, a forcing of the latter through the former will be required. These needs are quite compatible with the accuracy and precision properties of the currently available crown saws, which typically have an allowance of about 0.4 mm in excess of the nominal size.

Once obtained the connector seat D in the wall P, the related swarf is removed and the edges of the seat are gently bevelled, e.g., with an abrasive paper. This is necessary in order to avoid a possible tearing of the fitted gasket 1 by the cutting surface.

Then, the entire connector set 100 can be inserted within the connector seat D from the outside of the tank S, according to the direction indicated with an arrow in Fig. 3A. In particular, the inside ring nut 2 and the gasket 1 are passed through the seat D until the deformable region 11 of the gasket 1 locates onto the inside part of the wall P and the tab portion 14 abuts the outside face thereof, as it is shown in Fig. 3B.

It will be understood that, even if the deformable region 11 of the gasket 1 has a maximum diameter 10 which is slightly greater than that of the connector seat D, said portion anyhow can, by means of a manual deformation, be induced to cross the seat.

Then, the deforming means should be operated to bring the connector set 100, and in particular the gasket 1, in the seal configuration. Therefor, it suffices to rotate the outside ring nut 4 in the sense apt to cause the advancement thereof towards the inside of the tank S, in the present embodiment it being a clockwise sense, indicated with an arrow in Fig. 3B. Concomitantly, the rotation of the tubular member 5 should be prevented, e.g., tightening the latter with a suitable key. Actually, since the outside ring nut 4 is already abutted by means of the washer 3 and the annular tab 14 onto the wall P of the tank S, it cannot advance towards the inside of the tank S itself. Hence, said rotation of the outside ring nut 4 causes a translational motion of the tubular member 5, which slides with respect to the outside ring nut from the inside to the outside of the tank S. In this translational motion, by virtue of the firm tightening, the tubular member 5 drags also the inside ring nut 2 therewith, as well as, of course, the annular gasket 6 housed therein.

It will be understood that variant embodiments could provide threads apt to bring the gasket in a seal configuration by a counterclockwise rotation. This type of threads is recommendable in case of gas-containing tanks.

With reference now to Fig. 4, upon rotation of the outside ring nut 4, the gasket 1 is subjected to compression. In fact, the gasket 1 is locked at one end, at the tab portion 14 thereof, against the outside face of the wall P, and at the opposite end, at the first coupling portion 12 thereof, within the inside ring nut 2. Therefore, the advancement of the inside ring nut 2 towards the wall P, pushing wall-wise the first coupling portion 12, induces the gasket 1 to deform. In particular, by virtue of such advancement and of the abutment of the greater section portion 113 onto the mouth of the connector seat D, the first wall 111 is pushed towards the second wall 112, until overturning onto the latter, rotating at the greater section portion 113 and at the weakening groove 114 internal thereto. In this deformed condition, shown in Fig. 4, the gasket 1 contrasts a further advancement of the inside ring nut 2, i.e., of the tubular member 5, towards the outside of the tank S.

The outside operator, sensing the increased resistance to rotation of the outside ring nut 4, realises that the connector set 100 has been brought to the desirable seal configuration and therefore ceases to force in rotation the outside ring nut itself.

It will presently be better appreciated how the gasket 1 of the invention, deformed into said seal configuration, provides a tight seal internally to the tank S. This is attained thanks to the presence of the deformable region 11. In particular, the convex shape of the latter induces the gasket 1 to flex in a desirable manner, addressing therefor the compressive forces generated by the rotation of the outside ring nut 4.

Concomitantly, in the present embodiment the seal at the outside mouth of the seat D is assured by said tab portion 14, whereas the central portion of the gasket 1 ensures a seal along the inside wall of said seat D. In particular, the second coupling portion 13 co-operates with such inside wall to create a seal, avoiding a slack of the gasket itself inside of the seat D. However, such second coupling portion 13, having a longitudinal extension 130 which is smaller than that of the seat D, does not interfere with the deformation of the gasket 1 inside the tank S.

Hence, the gasket of the present embodiment allows, by virtue of its tubular shape, to attain a seal onto the entire connector seat, mouths included, with an individual gasket insertable from merely one side of the wall P, whereas with the currently available techniques at least two distinct gaskets, to be inserted at opposite sides of the wall P, would be required.

Moreover, the advantages associated with the use of the washer 3 should not be neglected. The latter, interposed between the outside ring nut 4 and the gasket 1, works as a bearing. In fact, the outside ring nut 4, rotating to deform the gasket 1, slides onto the washer 3, the coupling therebetween being a low-friction one. Therefore, the rotary motion of the outside ring nut 4 is not transmitted to the gasket 1. Were it driven thereto, malfunctioning of the connector set 100 could occur, since the rotation of the outside ring nut 4 could cause a dislodgement of the first annular coupling portion 12 of the gasket 1 from the seat 21 thereof in the inside ring nut 2.

It will presently be better understood how an individual worker, operating merely from one side of the wall P, can quickly assemble and install the connector set according to the invention, merely by tightening the outside ring nut against the wall.

It will further be appreciated that the connector set of the invention also provides the relevant advantage of making the installation onto the wall easily revertible. In fact, to extract the connection it suffices to disengage the coupling between the outside ring nut and the tubular member, so that the latter may slide towards the inside of the wall, always operating merely from one side of the wall.

It will also be appreciated that the steps of uninstalling and/or maintaining a connection for tank according to the invention, being carried out from the outside with a component not immersed in the fluid, provide a more satisfactory hygiene of the fluid itself Moreover, the fact that the component which is being handled, i.e., the outside locking device, is not immersed in the fluid, renders the former less prone to deterioration which, after a prolonged inactivity, might complicate the operation thereof.

A further advantage of the hereto disclosed embodiment lies in that the bevel corner of the inside ring nut prevents possible tearing of the gasket when the latter, assuming the seal configuration, contacts the corner itself.

It will be understood that the dimensions of all of the components of the connector set of the invention should be selected according to the dimensions of the connector seat, of the standardised dimensions of the commercially available tubular members and of the thickness of the wall which is to be connected. Moreover, such dimensions, and in particular those of the gasket of the invention, should be selected according to the fluid pressure.

In the hereto disclosed embodiment, the connector set is compatible with the installation on a tank apt to contain hundreds or thousands of litres of water.

For this specific application a tubular member of an outside diameter equal to about ¾ of an inch, according to a standard widely adopted in the trade, can be used. Preferred sizes of the components of the set of the invention for said specific application are indicated hereinafter, of course purely by way of example, with reference to the heights reported in Fig. 5.

Maximum diameter of the greater section portion 113, indicated with an arrow 10: Preferably comprised in a 35ö41 mm range, and more preferably equal to about 38 mm.

Diameter of the second annular coupling portion 13, it also indicated with an arrow 10: Preferably comprised in a 35ö41 mm range, and more preferably equal to about 38 mm.

Maximum diameter of the weakening groove 114, indicated with an arrow 141: Preferably comprised in a 33ö39 mm range, and more preferably equal to about 36mm.

Width of the weakening groove 114, indicated with an arrow 142: Preferably comprised in a 1ö5 mm range, and more preferably equal to about 3 mm.

Overall length of the gasket 1, indicated with an arrow 110: Preferably comprised in a 26ö32 mm range, and more preferably equal to about 29 mm.

Height of the frustum of cone defining the walls 111 and 112 of the convex area 11, indicated with an arrow 115: preferably comprised in a 6.0ö11.0 mm range, and more preferably equal to about 8.5 mm.

Thickness of the walls 111 and 112 and of the first coupling portion 12, indicated with an arrow 120: preferably comprised in a 1ö3 mm range, and more preferably equal to about 2 mm.

Diameter of the tab portion 14, indicated with an arrow 140: preferably comprised in a 44ö50 mm range, and more preferably equal to about 47 mm.

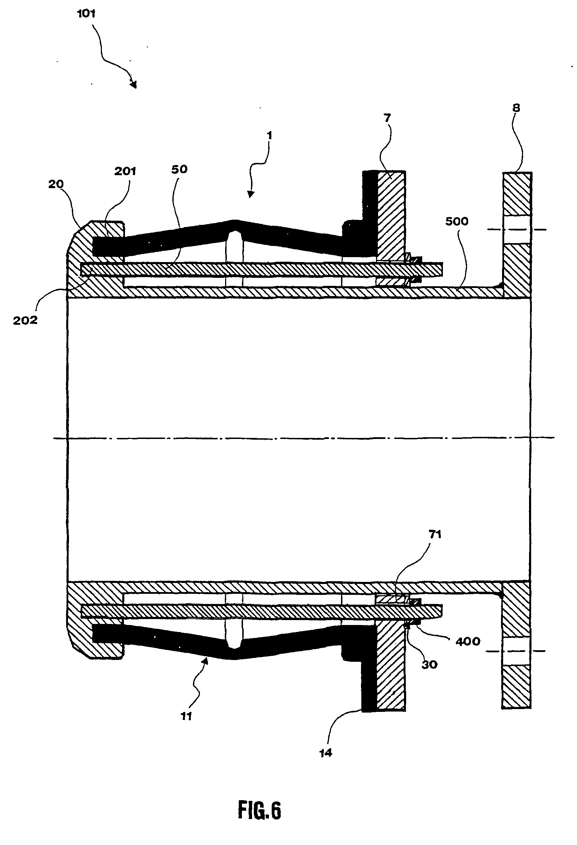

Further embodiments of the invention will hereinafter be described with reference to Figs. 6 to 13. This description will exclusively relate to the aspects differentiating it from the first embodiment described above. Hence, components equivalent to the hereto described ones will be indicated with the same reference number already used.

With initial reference to Fig. 6, according to a second embodiment, a connector set 101 comprises a gasket 1, having a deformable region 11, and deforming means of such gasket 1.

In this second embodiment, the deforming means comprises an inside locking flange 20, apt to abut the gasket 1 when the latter assumes the seal configuration. The inside locking flange 20 provides a gasket seat 201, of shape and location analogous to the ones described above with reference to the first embodiment.

Internally to such gasket seat 201, the inside locking flange 20 comprises a plurality of notches (only two of which shown in Fig. 6), each indicated by 202 and apt to receive a respective threaded rod 50. Preferably, such notches are uniformly distributed onto the periphery of the inside locking flange 20. The notches 202 can have a thread complementary to that of the respective rod 50, or provide the rod to be directly welded therein during the manufacture or assembly of the set 141.

The inside locking flange 20 is made integral to a tubular body 500.

The deforming means further comprises a plurality of small outside ring nuts, each indicated with 400, in a number equalling that of the notches 202. Each small ring nut 400 has an internal nut thread complementary to the outer thread of a respective rod 50. Such small ring nuts 400 can consist, e.g., of mere nuts.

Moreover, the deforming means comprises a guide flange 7, apt to abut the wall interested by the connection (not shown in Fig. 6) by interposition of an end tab portion 14 of the gasket 1. The guide flange 7 has a plurality of through holes 71, each apt to allow the passage of a respective threaded rod 50. The guide flange 7 further comprises a central port, apt to allow the passage of the tubular body 500.

Lastly, the deforming means of the present embodiment comprises a plurality of small washers 30, each apt to be interposed between a respective small ring nut 400 and the guide flange 7.

In Fig. 6 a connecting flange 8, apt to allow the connection of the connector set 101 to further hydraulic components, is also shown.

To assemble the set 101, first of all a user tightly fixes, provided this step has not been carried out during the manufacture of the connector 101, the threaded rods 50 within the respective threaded notches 201.

Then, the user inserts the gasket 1 onto the tubular body 500, and fixes a first coupling portion 12 of the former within the gasket seat 21 of the inside locking flange 20.

In this condition, the user brings the guide flange 7 in abutment onto an end tab portion 14 of the gasket 1, passing the threaded rods 50 through the through holes 71, and, after interposition of the respective washer 30, tightens each of the small ring nuts 400 onto the respective threaded rod 50.

The set 101 thus assembled can be inserted within a connector seat obtained in the wall. Then, in order to deform the deformable region 11 of the gasket 1, the user rotates the small ring nuts 400 in the sense apt to cause the advancement thereof towards the inside of the wall, according to modes analogous to those already described with reference to the first embodiment. This rotation of the small ring nuts 400 causes a translation towards the outside of the wall of the threaded rods 50, which also drag in such translation the inside locking flange 20, and, thus, the tubular body 500 integral thereto.

Upon installation of the set 101 and deformation of the gasket 1 in said seal configuration, the coupling flange 8 is welded onto the tubular body 500. Of course, such welding step could also have been carried out previously, during the assembling of the set 101.

The second embodiment hereto described is particularly suitable for the implementation of connectors having a large section, wherein the gripping with a single tool of a single outside ring nut would prove difficult and would require a considerable effort.

It will be appreciated that, by virtue of the integral implementation of the inside locking flange 20 to the tubular body 500, the set of the present embodiment is extremely compact and easy to assemble. Moreover, also by virtue of the welding of the connecting flange 8 to the rest of the set 101, the latter effectively prevents any fluid leak.

It will however be understood that both the inside locking flange and the connecting flange can be connected to the tubular body by screw-nut thread coupling instead that by welding. In that case, if non-seal threads are used additional sealing means seal of traditional type, like, e.g., hemp or Teflon, should be provided.

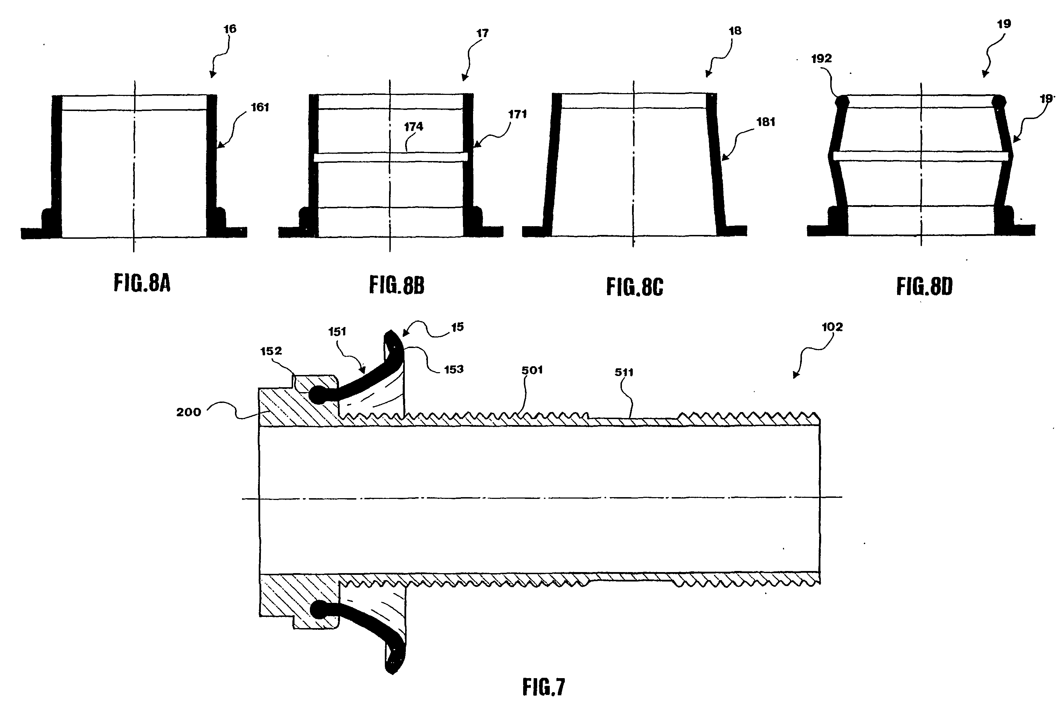

Fig. 7 relates to a third embodiment of the set of the invention. According to this third embodiment, a connector set 102 comprises a substantially frustoconical gasket 15, having a deformable central area 151.

The gasket 15, at the lower end cross section thereof, provides a substantially ring-shaped coupling portion 152, according to the typical shape of the gasket commonly called 'o-rings'.

At the greater end cross section thereof, instead, the gasket 15 provides a raised end edge 153, implementing a greater section portion of the deformable region 15. At such edge 153, the gasket 15 is apt to abut the inside mouth of a connector seat (not shown in Fig. 7), to assume the seal configuration.

According to the invention, the connector set 102 further comprises deforming means of the gasket 15, which in the present embodiment provides an inside locking flange 200 integral to a threaded tubular member 501. The latter has an entirely threaded outside surface, to allow the connection thereof to an outside ring nut, not shown in Fig. 7 as it is in all analogous to that described with reference to the first embodiment, and with other hydraulic components.

Said thread is sheared at a section 511, to allow the gripping of the tubular member 501 by means of a suitable tool capable of preventing the rotation thereof when the gasket 15 is deformed in the seal configuration.

In this case as well, the integral implementation of the inside locking flange 200 to the tubular body 501 makes the set of the invention simple to assemble. It will anyhow be understood that in this case as well a variant embodiment comprises a threaded connection between the tubular body and the inside locking flange.

Once assembled, the set 102 can be inserted in the connector seat, so that the gasket 15 crosses the latter from side to side, until locating at the inside part of the wall.

Then, operating the outside ring nut, the tubular member 501 and the inside locking flange 200 integral thereto are forced to advance towards the outside of the wall, thus deforming the gasket 15. In particular, the gasket 15, by virtue of its frustoconical shape and of the raised edge 153 thereof, squashes onto the inside mouth of the connector seat, thus ensuring a highly reliable seal. By virtue of such seal, no provision of other gaskets at the outside portion of the wall is required.

Moreover, since the gasket 15 entirely lies at the inside portion of the wall, no provision of a washer-bearing to be interposed between the outside ring nut and the gasket itself is required.

Such third embodiment is particularly suitable for small-sized tanks, e.g., apt to contain few tens of litres. In such tanks, due to the reduced dimensions of the mouth, the caisson connectors mentioned with reference to the known art are actually impossible to fit.

Fig. 8D shows a further embodiment of the gasket of the invention. In particular, in this further embodiment it is provided that the gasket has a substantially tubular shape, so as to be placeable within a connector seat to implement a seal at both mouths thereof.

In Fig. 8A a gasket 16 having a deformable region 161 of a substantially cylindrical shape is shown. This gasket does not form part of the invention.

In Fig. 8B a gasket 17 has a deformable region 171, always of a cylindrical shape, yet provided with a weakening groove 174. This gasket does not form part of the invention.

In Fig. 8C, a gasket 18 has a deformable region 181 of a substantially frustoconical shape. By virtue of this shape, the gasket 18 needs no second coupling portion of the type described with reference to the first embodiment. The gasket of Fig. 8C does not form part of the invention.

Lastly, in Fig. 8D a gasket 19 has a deformable region 191 and a first coupling portion 192 substantially having an 'o-ring' shape.

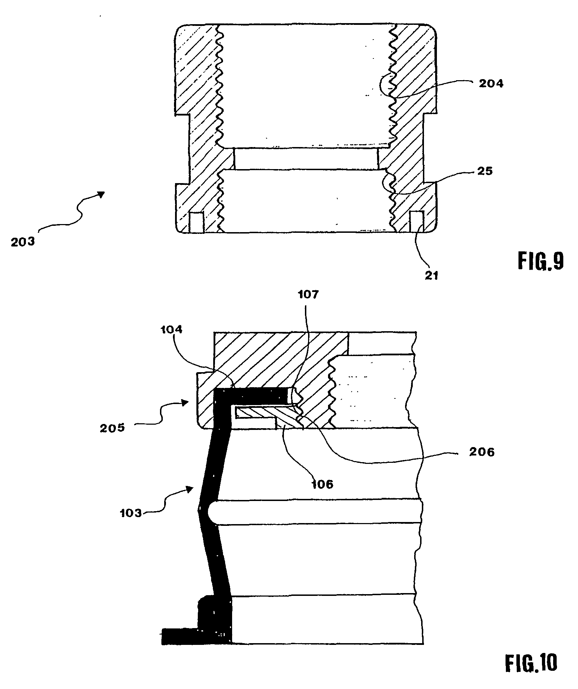

With reference to Fig. 9, an inside locking device of a fourth embodiment of the set of the invention is generally indicated with 203. The device 203 provides a gasket seat 21 and an inside nut thread 25 in all analogous to those of the inside ring nut of the first embodiment described above.

However, contrarily to the latter one, the device 203 also comprises another inside nut thread 204, obtained opposite to the thread 25 and apt to allow the connection of the device 203 itself to a float or other specific member suitable to particular applicative needs of the set of the invention.

It will be understood that variants to the fourth embodiment described above could provide connecting means between the float and the inside locking device different from those herein described.

According to a fifth embodiment shown in Fig. 10, a gasket 103 according to the invention is associated with an inside locking device 205 by engaging means alternative to a mere seat in which the gasket is restrained.

In particular, the gasket 103 has a first coupling portion 104 substantially shaped as a reentering annular tab. Otherwise, the gasket 103 is identical to that of the first embodiment.

The gasket 103 is made integral to the inside locking device 205 by interposition of a locking member 106, in particular a small ring nut apt to abut the tab 104. Therefor, such locking member 106 has a nut thread 107 complementary to an internal thread 206 of the device 205 itself.

Of course, variant embodiments could provide another different connection between the gasket and the locking device, implemented, e.g., by a rivet. It will be understood that this solution alternative to the mere restraining is particularly suitable in case of connectors having a considerable diameter and for high pressures.

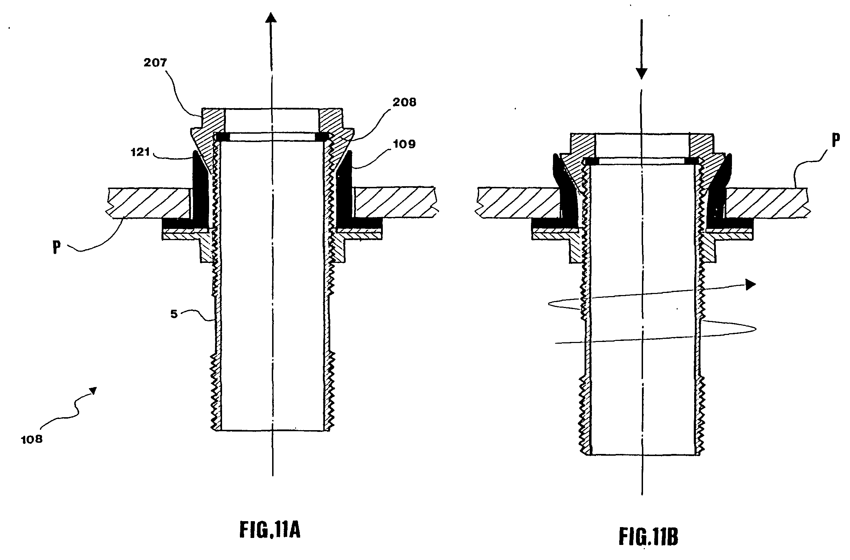

Figs. 11A and 11B relate to a sixth embodiment of the set of the invention, showing it in a configuration of insertion through a wall P, and of seal, respectively.

With reference to the latter two Figures, a connector set 108 comprises a gasket 109 and an inside locking device 207 consisting of a shaped ring nut. The gasket 109 has a shape which is analogous to that of the gasket already described with reference to Fig. 8A, in particular comprising a substantially cylindrical deformable region. However, the gasket 10, differently from the latter one, comprises a coupling portion 121 internally having a substantially frustoconical profile with a thickness tapering lengthwise from the inside to the outside of the gasket itself.

Correspondingly, the shaped ring nut 207 has, instead of a gasket seat, a portion 208 with a substantially frustoconical outer profile, apt to engage the coupling portion 121 of the gasket 109. Therefore, as it is shown in Fig. 11B, operating a tubular member 5 of the set 108 according to the modes hereto described with reference to the first embodiment, the frustoconical portion 208 of the ring nut 207, abutting the coupling portion 121 of the gasket 109, determines a mechanical expansion thereof apt to ensure the seal onto the inside face of the wall P as well as to avoid the dislodging of the ring nut 207 itself.

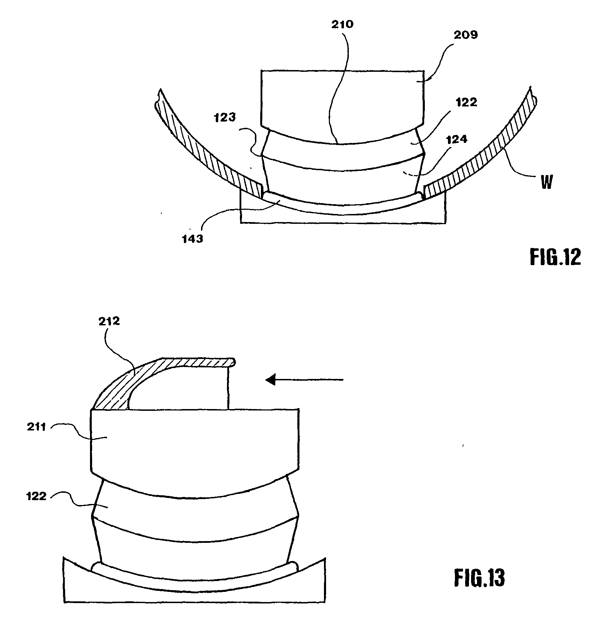

Fig. 12 relates to a seventh embodiment of a set according to the invention, showing some components thereof in a seal configuration on a wall W of a circular profile. The set of this embodiment comprises a gasket 122 and an inside locking ring nut 209 apt to co-operate with the gasket 122 to deform it.

Both such components have a structure similar to that of the analogous components described with reference to the first embodiment, with the difference that the cross sections of the former have an arched development instead of a plane one. In particular, the gasket 122 has a coupling tab 143, a greater section portion 123 of the deformable region and a weakening groove 124 having a substantially circular profile. Concerning the ring nut 209, this has an end portion 210 it also having a substantially circular profile, apt to abut the gasket 122.

With reference to Fig. 13, on the basis of a variant to the seventh embodiment, an inside locking ring nut 211 comprises, opposite with respect to the portion apt to co-operate with the gasket 122, a conveying member 212 apt to ease the fluid flow into the connector set. In Fig. 13, the direction and the sense of the fluid are indicated by an arrow.

It will be appreciated that the connector sets of the hereto described sixth and seventh embodiment have a high adaptability to the profile of the wall onto which they are applied, therefore being particularly suitable to ensure a seal on walls having a non-planar, e.g., circular, profile, in particular when having a high curving.

Furthermore, it will be understood that also the inside locking devices described with reference to these latter embodiments can have suitable connecting means with a tool like, e.g., a float.

Those skilled in the art will appreciate that the gasket of the invention is susceptible of several other shapes. E.g., it could have more than one weakening groove, not necessarily in a centred position.

Moreover, it will be understood that alternate embodiments could provide that even other components of the hereto described connector set be made integral therebetween. For instance, the gasket could be made integral, e.g., by moulding, to the inside locking device. Of course, a more modular implementation as the one described with reference to the first embodiment provides the advantage of allowing an easier interchangeability and reuse of the individual components, whereas the integral implementation of the components simplifies the assembling of the set by an end user.

Moreover, one of the components of the set of the invention could incorporate a measurer of hydraulic quantities, e.g., of pressure or rate of flow.

## Claims

1. A gasket (1) for use with a connector set (100) apt to allow the seal flow of a fluid through a wall (P; W), which gasket (1) comprises a deformable region (11), to assume an installation configuration, wherein said gasket (1) can be inserted in a connector seat (D) obtained into the wall (P; W), engaging it from side to side, and a seal configuration, wherein said gasket (1) is installed on the wall (P; W) and deformed, at said deformable region (11), to abut an inside mouth of the connector seat (D),
wherein said deformable region (11) has a portion (113) having a cross section substantially greater than that of adjacent gasket portions and apt to abut onto the inside mouth of the connector seat (D), said gasket (1) having, at said deformable region (11), a substantially convex shape,
**characterised in that** said gasket (1) further comprises a tab-shaped end portion (14), apt to abut an outside mouth of the connector seat (D) to provide a seal, and an adjacent outside coupling portion (13), apt to cooperate with the inside wall of the connector seat (D) to provide a seal, which coupling portion (13) has a greater wall thickness (131) with respect to said deformable region (11).

2. The gasket (1) according to claim 1, wherein said deformable region (11) is defined by a first (111) and a second wall (112), both having a substantially frustocone-shaped profile and juxtaposed at the greater base (113) of the frustum of cone.

3. The gasket (1) according to any one of the preceding claims, comprising an inside coupling portion (12), for the connection of the gasket itself to an inside locking device (2), apt to lock a tubular member (5) of the connector set (100) at the inside of the wall (P).

4. The gasket (15) according to claim 3, wherein said inside coupling portion (152) is substantially shaped as an o-ring.

5. The gasket (103) according to claim 3, wherein said inside coupling portion (104) is substantially shaped as a reentering annular tab apt to abut a locking member (106) connectable to the inside locking device (205).

6. The gasket (109) according to claim 3, wherein said inside coupling portion (121) has a substantially frustoconical inside profile.

7. The gasket (1) according to any one of the preceding claims, wherein said deformable region (11) comprises at least one weakening groove (114).

8. The gasket (1) according to claim 7, wherein said at least one weakening groove (114) is an annular groove obtained at said greater section portion (113).

9. The gasket (122) according to any one of the preceding claims, having cross sections (143, 123) of an arched development.

10. The gasket (1) according to any one of the preceding claims, made in a non-toxic rubber.

11. A connector set (100), **characterised in that** it comprises a gasket (1) according to any one of the preceding claims and deforming means (2, 3, 4) for deforming said gasket, apt to be operated to deform the gasket itself in said seal configuration.

12. The connector set (100; 101; 102; 108) according to claim 11, wherein said deforming means comprises an inside locking device (2) apt to lock a tubular connector member (5) at the inside of the wall (P), having engaging means (21) for engaging said gasket (1).

13. The connector set (100) according to claim 12, wherein said engaging means of said inside locking device (2) comprises an annular gasket seat (21).

14. The connector set (100) according to the preceding claim, wherein said inside locking device (2) has, at said gasket seat (21), an external bevel corner (26).

15. The connector set (108) according to claim 12, wherein said engaging means of said inside locking device (207) comprises a substantially frustoconical portion (208) apt to engage a respective coupling portion (121) of said gasket (109).

16. The connector set according to claim 12, wherein said engaging means of said inside locking device (205) comprises an inside thread (206) apt to engage a correspondent nut thread (107) of a locking member (106) abutted onto a coupling portion (104) of said gasket (103).

17. The connector set (100) according to any one of the claims 12 to 16, wherein said inside locking device (2) has a cross section of dimensions (20) substantially comparable to the maximum transversal dimensions of said gasket (1), when the latter is in an undeformed configuration.

18. The connector set (100) according to any one of the claims 12 to 17, wherein said inside locking device (2) has, near to a transversal end section thereof, a ledge (23), for the resting in abutment of the tubular connector member (5).

19. The connector set (100) according to any one of the claims 12 to 17, wherein said inside locking device (20) is made integral to the tubular connector member (500).

20. The connector set (100) according to any one of the claims 12 to 19, wherein said inside locking device comprises a ring nut (2).

21. The connector set according to any one of the claims 12 to 20, wherein said inside locking device (203) comprises connecting means (204) for connection to a float.

22. The connector set according to any one of the claims 12 to 21, wherein said inside locking device (209) comprises an end portion (210) having a substantially circular profile apt to abut a corresponding portion of said gasket (122).

23. The connector set according to any one of the claims 12 to 22, wherein said inside locking device (211) comprises a conveying member (212) apt to ease the fluid flow in the connector set itself.

24. The connector set (100) according to any one of the claims 11 to 23, wherein said deforming means comprises at least one outside locking device (4) to lock a tubular connector member (5) at the outside of the wall (P).

25. The connector set (100) according to the preceding claim, wherein said at least one outside locking device comprises a ring nut (4).

26. The connector set (101) according to any one of the claims 11 to 23 and according to claim 24 or 25, wherein said deforming means comprises a plurality of threaded rods (50), apt to be fixed to said inside locking device (20), each apt to be operated by a respective outside locking device (400) to bring said gasket (1) in said seal configuration.

27. The connector set (100) according to any one of the claims 24 to 26, wherein said deforming means comprises an intermediate coupling member (3; 30) between said at least one outside locking device (4; 400) and said gasket (1).

28. The connector set (100) according to the preceding claim, wherein said intermediate coupling member comprises a washer (3; 30).

29. The connector set (100) according to claim 27 or 28, wherein said intermediate coupling member (3) and said at least one outside locking device (4) have respective faces (41) apt to abut therebetween to implement a low-friction coupling.

30. The connector set (100) according to the preceding claim, wherein said respective faces (41) of said intermediate coupling member (3) and of said at least one outside locking device (4) are made in polished metal.

31. A method to implement a connection apt to allow the seal flow of a fluid through a wall (P; W), **characterised in that** it comprises the steps of:
- providing a connector set (100; 101; 102; 108) comprising a gasket (1; 15; 16; 17; 18; 19; 103; 109; 122) according to any one of the claims 1 to 10, deforming means (2, 3, 4; 20, 400, 50, 7; 200) for deforming said gasket, apt to be operated to deform the latter into said seal configuration, and a tubular connector member (5; 500; 501) associated with said means;
- obtaining a connector seat (D) into the wall (P; W);
- inserting said connector set, in an assembled configuration, within said connector seat from the outside of the wall, until said gasket crosses the wall; and
- operating said deforming means to bring said gasket in said seal configuration.

32. The method according to claim 31, wherein said connector seat has transversal dimensions substantially comparable to the maximum transversal dimensions of said greater section portion (113) of said gasket.

33. The method according to claim 31 or 32, wherein said step of inserting said connector set (100) in said connector seat (D) provides that said set be inserted in said seat until said tab-shaped end portion (14) of said gasket abuts onto an outside mouth of the connector seat.

34. The method according to any one of the claims 31 to 33, wherein said step of operating said deforming means comprises a step of rotating at least one outside locking device (4; 400) with respect to said tubular connector member (5; 500), to make the latter slide from the inside to the outside of the wall (P).

35. The method according to any one of the claims 31 to 34, wherein said connector seat has a longitudinal extension which is substantially greater than that (130) of said outside coupling portion (13) of said gasket.

36. The method according to any one of the claims 31to 35, comprising the further step of bevelling the edges of said connector seat (D).

37. The method according to any one of the claims 31 to 36, comprising the further step of welding onto the tubular connector member (500) a coupling flange (8), for the connection to further hydraulic components.

## Patentansprüche

1. Dichtung (1) zur Verwendung in Verbindung mit einem Verbindersatz (100), geeignet dazu, einen gedichteten Fluss eines Fluids durch eine Wand (P; W) zu ermöglichen, wobei die Dichtung (1) einen deformierbaren Bereich (11) aufweist, um eine Installationskonfiguration, in der die Dichtung (1) in einem Verbindersitz (D), erhalten in der Wand (P; W), darin von Seite zu Seite eingreifend, eingesetzt werden kann, und eine Dichtungskonfiguration, in der die Dichtung (1) in der Wand (P; W) installiert und deformiert ist, anzunehmen, und zwar an dem deformierbaren Bereich (11), um an die innenseitige Öffnung des Verbindersitzes (D) anzustoßen, wobei der deformierbare Bereich (11) einen Bereich (113) besitzt, der einen Querschnitt im Wesentlichen größer als derjenige der angrenzenden Dichtungsbereiche besitzt und so angepasst ist, um an die innenseitige Öffnung des Verbindersitzes (D) anzustoßen, wobei die Dichtung (1), an dem deformierbaren Bereich (11), eine im Wesentlichen konvexe Form besitzt,
**dadurch gekennzeichnet, dass** die Dichtung (1) weiterhin einen laschenförmigen Endbereich (14), der so angepasst ist, um an eine außenseitige Öffnung des Verbindersitzes (D), um eine Dichtung zu bilden, anzustoßen, und einen angrenzenden, außenseitigen Verbindungsbereich (13) aufweist, angepasst so, um mit der Innenseitenwand des Verbindersitzes (D) so zusammenzuwirken, um eine Dichtung zu bilden, wobei der Verbindungsbereich (13) eine größere Wanddicke (131) in Bezug auf den deformierbaren Bereich (11) besitzt.

2. Dichtung (1) nach Anspruch 1, wobei der deformierbare Bereich (11) durch eine erste (111) und eine zweite Wand (112) definiert ist, die beide ein im Wesentlichen kegelstumpfförmiges Profil besitzen und an einer größeren Basis (113) des Kegelstumpfes nebeneinander gelegt sind.

3. Dichtung (1) nach einem der vorhergehenden Ansprüche, die einen innenseitigen Verbindungsbereich (12), für die Verbindung der Dichtung selbst an einer inneren Verriegelungsvorrichtung (2), besitzt, angepasst so, um ein rohrförmiges Element (5) des Verbindersatzes (100) an der Innenseite der Wand (P) zu verriegeln.

4. Dichtung (15) nach Anspruch 3, wobei der innenseitige Verbindungsbereich (152) im Wesentlichen als ein O-Ring geformt ist.

5. Dichtung (103) nach Anspruch 3, wobei der innenseitige Verbindungsbereich (104) im Wesentlichen als eine wieder eintretende, ringförmige Lasche geformt ist, angepasst so, um gegen ein Verriegelungselement (106), verbindbar mit der innenseitigen Verriegelungsvorrichtung (205), anzustoßen.

6. Dichtung (109) nach Anspruch 3, wobei der innenseitige Verbindungsbereich (121) ein im Wesentlichen kegelstumpfförmiges Innenseitenprofil besitzt.

7. Dichtung (1) nach einem der vorhergehenden Ansprüche, wobei der deformierbare Bereich (11) mindestens eine Schwächungsnut (114) aufweist.

8. Dichtung (1) nach Anspruch 7, wobei die mindestens eine Schwächungsnut (114) eine ringförmige Nut ist, erhalten an dem größeren Querschnittsbereich (113).

9. Dichtung (122) nach einem der vorhergehenden Ansprüche, die Querschnitte (143, 123) einer bogenförmigen Abwicklung besitzt.

10. Dichtung (1) nach einem der vorhergehenden Ansprüche, hergestellt aus einem nicht-toxischen Gummi.

11. Verbindersatz (100), **dadurch gekennzeichnet, dass** er eine Dichtung (1) nach einem der vorhergehenden Ansprüche und eine Deformierungseinrichtung (2, 3, 4) zum Deformieren der Dichtung, angepasst so, um derart betrieben zu werden, um die Dichtung selbst in der Dichtungskonfiguration zu deformieren, aufweist.

12. Verbindersatz (100; 101; 102; 108) nach Anspruch 11, wobei die Deformierungseinrichtung eine innenseitige Verriegelungsvorrichtung (2), angepasst so, um ein rohrförmiges Verbinderelement (5) an der Innenseite der Wand (P) zu verriegeln, mit Eingriffsmitteln (21) zum Eingreifen in die Dichtung (1), aufweist.

13. Verbindersatz (100) nach Anspruch 12, wobei die Eingriffsmittel der innenseitigen Verriegelungsvorrichtung (2) einen ringförmigen Dichtungssitz (21) aufweisen.

14. Verbindersatz (100) nach dem vorhergehenden Anspruch, wobei die innenseitige Verriegelungsvorrichtung (2), an dem Dichtungssitz (21), eine äußere, abgeschrägte Ecke (26) besitzt.

15. Verbindersatz (108) nach Anspruch 12, wobei die Eingriffseinrichtung der innenseitigen Verriegelungsvorrichtung (207) einen im Wesentlichen kegelstumpfförmigen Bereich (208), angepasst so, um in einen jeweiligen Verbindungsbereich (121) der Dichtung (109) einzugreifen, aufweist.

16. Verbindersatz nach Anspruch 12, wobei die Eingriffseinrichtung der innenseitigen Verriegelungsvorrichtung (205) ein Innengewinde (206) aufweist, angepasst so, um in ein entsprechendes Muttergewinde (107) eines Verriegelungselements (106), angestoßen an einen Verbindungsbereich (104) der Dichtung (103), einzugreifen.

17. Verbindersatz (100) nach einem der Ansprüche 12 bis 16, wobei die innenseitige Verriegelungsvorrichtung (2) einen Querschnitt mit Dimensionen (20) im Wesentlichen vergleichbar mit den maximalen Querdimensionen der Dichtung (1), wenn sich letztere in einer nicht deformierten Konfiguration befindet, besitzt.

18. Verbindersatz (100) nach einem der Ansprüche 12 bis 17, wobei die innenseitige Verriegelungsvorrichtung (2), nahe einem quer verlaufenden Endquerschnitt davon, eine Leiste (23), zum Aufnehmen anstoßend des rohrförmigen Verbinderelements (5), besitzt.

19. Verbindersatz (100) nach einem der Ansprüche 12 bis 17, wobei die innenseitige Verriegelungsvorrichtung (20) integral mit dem rohrförmigen Verbinderelement (500) hergestellt ist.

20. Verbindersatz (100) nach einem der Ansprüche 12 bis 19, wobei die innenseitige Verriegelungsvorrichtung eine Ringmutter (2) aufweist.

21. Verbindersatz nach einem der Ansprüche 12 bis 20, wobei die innenseitige Verriegelungsvorrichtung (203) eine Verbindungseinrichtung (204) zum Verbinden mit einem Schwimmer aufweist.

22. Verbindersatz nach einem der Ansprüche 12 bis 21, wobei die innenseitige Verriegelungsvorrichtung (209) einen Endbereich (210) aufweist, der ein im Wesentlichen kreisförmiges Profil besitzt, angepasst so, um an einen entsprechenden Bereich der Dichtung (122) anzustoßen.

23. Verbindersatz nach einem der Ansprüche 12 bis 22, wobei die innenseitige Verriegelungsvorrichtung (211) ein Förderelement (212) aufweist, angepasst so, um die Fluidströmung in dem Verbindersatz selbst zu erleichtern.

24. Verbindersatz (100) nach einem der Ansprüche 11 bis 23, wobei die Deformierungseinrichtung mindestens eine außenseitige Verriegelungsvorrichtung (4) aufweist, um ein rohrförmiges Verbinderelement (5) an der Außenseite der Wand (P) zu verriegeln.

25. Verbindersatz (100) nach dem vorhergehenden Anspruch, wobei die mindestens eine außenseitige Verriegelungsvorrichtung eine Ringmutter (4) aufweist.

26. Verbindersatz (101) nach einem der Ansprüche 11 bis 23 und nach Anspruch 24 oder 25, wobei die Deformierungseinrichtung eine Vielzahl von Gewindestäben (50), angepasst so, um an der innenseitigen Verriegelungsvorrichtung (20) befestigt zu werden, aufweist, wobei jede so angepasst ist, um durch eine jeweilige außenseitige Verriegelungsvorrichtung (400) betätigt zu werden, um die Dichtung (1) in die Dichtungskonfiguration zu bringen.

27. Verbindersatz (100) nach einem der Ansprüche 24 bis 26, wobei die Deformierungseinrichtung ein Zwischenverbindungselement (3; 30) zwischen der mindestens einen außenseitigen Verriegelungsvorrichtung (4; 400) und der Dichtung (1) aufweist.

28. Verbindersatz (100) nach dem vorhergehenden Anspruch, wobei das Zwischenverbindungselement eine Unterlegscheibe (3; 30) aufweist.

29. Verbindersatz (100) nach Anspruch 27 oder 28, wobei das Zwischenverbindungselement (3) und die mindestens eine außenseitige Verriegelungsvorrichtung (4) jeweilige Flächen (41) besitzen, die so angepasst sind, um dazwischen anzustoßen, um eine Verbindung mit niedriger Reibung zu erzielen.

30. Verbindersatz (100) nach dem vorhergehenden Anspruch, wobei die jeweiligen Flächen (41) des Zwischenverbindungselements (3) und der mindestens einen außenseitigen Verriegelungsvorrichtung (4) aus poliertem Metall hergestellt sind.

31. Verfahren zum Ausführen einer Verbindung, geeignet dazu, den gedichteten Fluss eines Fluids durch eine Wand (P; W) zu ermöglichen, **dadurch gekennzeichnet, dass** es die Schritte aufweist:
- Bereitstellen eines Verbindersatzes (100; 101; 102; 108), aufweisend eine Dichtung (1; 15; 16; 17; 18; 19; 103; 109; 122) nach einem der Ansprüche 1 bis 10, eine Deformierungseinrichtung (2, 3, 4; 20, 400, 50, 7; 200) zum Deformieren der Dichtung, angepasst so, um so betätigt zu werden, um die letztere in die Dichtungskonfiguration zu deformieren, und ein rohrförmiges Verbinderelement (5; 500; 501), das der Einrichtung zugeordnet ist;
- Aufnehmen eines Verbindersitzes (D) in die Wand (P; W);
- Einsetzen des Verbindersatzes, in einer montierten Konfiguration, innerhalb des Verbindersitzes von der Außenseite der Wand aus, bis die Dichtung die Wand kreuzt; und
- Betätigen der Deformierungseinrichtung, um die Dichtung in die Dichtungskonfiguration zu bringen.

32. Verfahren nach Anspruch 31, wobei der Verbindersitz Querdimensionen im Wesentlichen vergleichbar mit den maximalen Querdimensionen des größeren Querschnittsbereichs (113) der Dichtung besitzt.

33. Verfahren nach Anspruch 31 oder 32, wobei der Schritt eines Einsetzens des Verbindersatzes (100) in den Verbindersitz (D) vorsieht, dass der Verbindersatz in den Sitz eingesetzt wird, bis der laschenförmige Endbereich (14) der Dichtung an die außenseitige Öffnung des Verbindersitzes anstößt.

34. Verfahren nach einem der Ansprüche 31 bis 33, wobei der Schritt eines Betätigens der Deformierungsenrichtung einen Schritt eines Drehens mindestens einer außenseitigen Verriegelungsvorrichtung (4; 400) in Bezug auf das rohrförmige Verbinderelement (5; 500) aufweist, um das letztere von der Innenseite zu der Außenseite der Wand (P) gleiten zu lassen.

35. Verfahren nach einem der Ansprüche 31 bis 34, wobei der Verbindersitz eine Längsverlängerung besitzt, die im Wesentlichen größer als diejenige (130) des außenseitigen Verbindungsbereichs (13) der Dichtung ist.

36. Verfahren nach einem der Ansprüche 31 bis 35, aufweisend den weiteren Schritt eines Abschrägens der Kanten des Verbindersitzes (D).

37. Verfahren nach einem der Ansprüche 31 bis 36, aufweisend den weiteren Schritt eines Anschweißens eines Verbindungsflansches (8) an das rohrförmige Verbinderelement (500), für die Verbindung mit weiteren, hydraulischen Komponenten.

## Revendications

1. Joint (1) destiné à être utilisé avec un ensemble de raccord (100) capable de permettre l'écoulement étanche d'un fluide à travers une paroi (P ; W), lequel joint (1) comporte une zone déformable (11), pour prendre une configuration d'installation, dans laquelle ledit joint (1) peut être inséré dans un siège pour raccord (2) obtenu dans la paroi (P ; W), en coopérant avec celle-ci depuis un côté jusqu'à l'autre côté, et une configuration étanche, dans laquelle ledit joint (1) est installé sur la paroi (P ; W) et déformé, au niveau de ladite zone déformable (11), pour venir en butée avec un orifice intérieur du siège pour raccord (D),
dans lequel ladite zone déformable (11) a une partie (113) ayant une section transversale nettement plus grande que celle de parties de joint adjacentes et capable de venir en butée contre l'orifice intérieur du siège pour raccord (D), ledit joint (1) ayant, au niveau de ladite zone déformable (11), une forme sensiblement convexe,
**caractérisé en ce que** ledit joint (1) comporte de plus une partie d'extrémité en forme de patte (14), pouvant venir en butée avec un orifice extérieur du siège pour raccord (D) pour assurer une étanchéité, et une partie de raccordement extérieure adjacente (13) capable de coopérer avec la paroi intérieure du siège pour raccord (D) pour assurer une étanchéité, laquelle partie de raccordement (13) a une épaisseur de paroi plus grande (131) par rapport à ladite zone déformable (11).

2. Joint (1) selon la revendication 1, dans lequel ladite zone déformable (11) est définie par une première (111) et une seconde paroi (112), les deux ayant un profil sensiblement en forme de tronc de cône et étant juxtaposées au niveau de la base plus grande (113) du tronc de cône.

3. Joint (1) selon l'une quelconque des revendications précédentes, comportant une partie de raccordement intérieure (12), destinée à la liaison du joint lui-même avec un dispositif de blocage intérieur (2), capable de bloquer un élément tubulaire (5) de l'ensemble de raccord (100) au niveau de l'intérieur de la paroi (P).

4. Joint (15) selon la revendication 3, dans lequel ladite partie de raccordement intérieure (152) a sensiblement une forme de joint torique.

5. Joint (103) selon la revendication 3, dans lequel ladite partie de raccordement intérieure (104) a sensiblement la forme d'une patte annulaire rentrante capable de venir en butée avec un élément de blocage (106) pouvant être relié au dispositif de blocage intérieur (205).

6. Joint (109) selon la revendication 3, dans lequel ladite partie de raccordement intérieure (121) a un profil intérieur sensiblement tronconique.

7. Joint (1) selon l'une quelconque des revendications précédentes, dans lequel ladite zone déformable (111) comporte au moins une gorge d'affaiblissement (114).

8. Joint (1) selon la revendication 7, dans lequel ladite au moins une gorge d'affaiblissement (114) est une gorge annulaire obtenue au niveau de la partie de section plus grande (113).

9. Joint (122) selon l'une quelconque des revendications précédentes, ayant des sections transversales (143, 23) constituées d'un développement en forme d'arc.

10. Joint (1) selon l'une quelconque des revendications précédentes, constitué d'un caoutchouc non-toxique.

11. Ensemble de raccord (100), **caractérisé en ce qu'**il comporte un joint (1) selon l'une quelconque des revendications précédentes et des moyens de déformation (2, 3, 4) pour déformer ledit joint, capables d'agir pour déformer le joint lui-même jusqu'à ladite configuration étanche.

12. Ensemble de raccord (100 ; 101 ; 102 ; 108) selon la revendication 11, dans lequel lesdits moyens de déformation comportent un dispositif de blocage intérieur (2) susceptible de bloquer un élément de raccord tubulaire (5) au niveau de l'intérieur de la paroi (P), ayant des moyens de mise en prise (21) pour mettre en prise ledit joint (1).

13. Ensemble de raccord (100) selon la revendication 12, dans lequel lesdits moyens de mise en prise dudit dispositif de blocage intérieur (2) comportent un siège pour joint annulaire (21).

14. Ensemble de raccord (100) selon la revendication précédente, dans lequel ledit dispositif de blocage intérieur (2) comporte, au niveau dudit siège pour joint (21), un coin extérieur biseauté (26).

15. Ensemble de raccord (108) selon la revendication 12, dans lequel lesdits moyens de mise en prise dudit dispositif de blocage intérieur (207) comportent une partie sensiblement tronconique (208) capable de venir en contact avec une partie de raccordement respective (121) dudit joint (109).

16. Ensemble de raccord selon la revendication 12, dans lequel lesdits moyens de mise en prise dudit dispositif de blocage intérieur (205) comportent un filet intérieur (206) capable de venir en prise avec un filet d'écrou correspondant (107) d'un élément de blocage (106) en butée sur une partie de raccordement (104) dudit joint (103).

17. Ensemble de raccord (100) selon l'une quelconque des revendications 12 à 16, dans lequel ledit dispositif de blocage intérieur (2) a une section transversale ayant des dimensions (20) sensiblement comparables aux dimensions transversales maximales dudit joint (1) lorsque ce dernier est dans une configuration non-déformée.

18. Ensemble de raccord (100) selon l'une quelconque des revendications 12 à 17, dans lequel ledit dispositif de blocage intérieur (2) comporte, à proximité d'une section d'extrémité transversale de celui-ci, un rebord (23), pour venir en appui de butée avec l'élément de raccord tubulaire (5).

19. Ensemble de raccord (100) selon l'une quelconque des revendications 12 à 17, dans lequel ledit dispositif de blocage intérieur (20) est constitué d'un seul tenant avec l'élément de raccord tubulaire (500).

20. Ensemble de raccord (100) selon l'une quelconque des revendications 12 à 19, dans lequel ledit dispositif de blocage intérieur est constitué d'un écrou annulaire (2).

21. Ensemble de raccord selon l'une quelconque des revendications 12 à 20, dans lequel ledit dispositif de blocage intérieur (203) est constitué de moyens de raccordement (204) destinés au raccordement à un flotteur.

22. Ensemble de raccord selon l'une quelconque des revendications 12 à 21, dans lequel ledit dispositif de blocage intérieur (209) comporte une partie d'extrémité (210) ayant un profil sensiblement circulaire capable de venir en butée avec une partie correspondante dudit joint (122).

23. Ensemble de raccord selon l'une quelconque des revendications 12 à 22, dans lequel ledit dispositif de blocage intérieur (211) comporte un élément de transport (212) capable de faciliter l'écoulement de fluide dans l'ensemble de raccord lui-même.

24. Ensemble de raccord (100) selon l'une quelconque des revendications 11 à 23, dans lequel lesdits moyens de déformation comportent au moins un dispositif de blocage extérieur (4) pour bloquer un élément de raccord tubulaire (5) au niveau de l'extérieur de la paroi (P).

25. Ensemble de raccord (100) selon la revendication précédente, dans lequel ledit au moins un dispositif de blocage extérieur comporte un écrou annulaire (4).

26. Ensemble de raccord (101) selon l'une quelconque des revendications 11 à 23 et selon la revendication 24 ou 25, dans lequel lesdits moyens de déformation comportent une pluralité de tiges filetées (50), pouvant être fixées sur ledit dispositif de blocage intérieur (20), chacune pouvant être actionnée par un dispositif de blocage extérieur respectif (400) pour amener ledit joint (1) dans ladite configuration étanche.

27. Ensemble de raccord (100) selon l'une quelconque des revendications 24 à 26, dans lequel lesdits moyens de déformation comportent un élément de raccordement intermédiaire (3 ; 30) entre ledit au moins un dispositif de blocage extérieur (4 ; 400) et ledit joint (1).

28. Ensemble de raccord (100) selon la revendication précédente, dans lequel ledit élément de raccordement intermédiaire est constitué d'une rondelle (3 ; 30).

29. Ensemble de raccord (100) selon la revendication 27 ou 28, dans lequel ledit élément de raccordement intermédiaire (3) et ledit au moins un dispositif de blocage extérieur (4) ont des faces respectives (41) pouvant venir en butée mutuelle pour réaliser un raccordement à faible frottement.

30. Ensemble de raccord (100) selon la revendication précédente, dans lequel lesdites faces respectives (41) dudit élément de raccordement intermédiaire (3) et dudit au moins un dispositif de blocage extérieur (4) sont constituées d'un métal poli.

31. Procédé pour mettre en oeuvre un raccordement pouvant permettre l'écoulement étanche d'un fluide à travers une paroi (P ; W), **caractérisé en ce qu'**il comporte les étapes consistant à :
- fournir un ensemble de raccord (100 ; 101 ; 102 ; 108) comportant un joint (1 ; 15 ; 16 ; 17 ; 18 ; 19 ; 103 ; 109 ; 122) selon l'une quelconque des revendications 1 à 10, des moyens de déformation (2, 3, 4 ; 20, 400, 500, 7 ; 200) pour déformer ledit joint, pouvant être activés pour déformer ce dernier jusqu'à ladite configuration étanche, et un élément de raccord tubulaire (5 ; 500 ; 501) associé auxdits moyens ;
- obtenir un siège pour raccord (D) dans la paroi (P ; W);
- insérer ledit ensemble de raccord, dans une configuration assemblée, dans ledit siège pour raccord à partir de l'extérieur de la paroi, jusqu'à ce que ledit joint traverse la paroi ; et
- activer lesdits moyens de déformation pour amener ledit joint dans ladite configuration étanche.

32. Procédé selon la revendication 31, dans lequel ledit siège pour raccord a des dimensions transversales sensiblement comparables aux dimensions transversales maximales de ladite partie de section plus grande (113) dudit joint.

33. Procédé selon la revendication 31 ou 32, dans lequel ladite étape consistant à insérer ledit ensemble de raccord (100) dans ledit siège pour raccord (D) assure que ledit ensemble est inséré dans ledit siège jusqu'à ce que la partie d'extrémité en forme de patte (14) dudit joint vienne en butée contre un orifice extérieur du siège pour raccord.

34. Procédé selon l'une quelconque des revendications 31 à 33, dans lequel ladite étape consistant à activer lesdits moyens de déformation comporte une étape consistant à mettre en rotation au moins un dispositif de blocage extérieur (4 ; 400) par rapport audit élément de raccord tubulaire (5 ; 500), pour faire coulisser ce dernier à partir de l'intérieur vers l'extérieur de la paroi (P).

35. Procédé selon l'une quelconque des revendications 31 à 34, dans lequel ledit siège pour raccord a une étendue longitudinale qui est nettement plus grande que celle (130) de ladite partie de raccordement extérieure (13) dudit joint.

36. Procédé selon l'une quelconque des revendications 31 à 35, comportant l'étape supplémentaire consistant à biseauter les bords dudit siège pour raccord (D).

37. Procédé selon l'une quelconque des revendications 31 à 36, comportant en outre l'étape consistant à souder sur l'élément de raccord tubulaire (500) un rebord de raccordement (8), destiné au raccordement à d'autres composants hydrauliques.
